# EUROPÄISCHE PATENTSCHRIFT

(11) **EP 2 520 409 B1**
(45) Veröffentlichungstag und Bekanntmachung des Hinweises auf die Patenterteilung: **16.07.2014**
(21) Anmeldenummer: 11003585.4
(22) Anmeldetag: 03.05.2011
(51) Int. Cl.: B29C 47/88, B44C 1/00, B44D 5/00

(54) **Verfahren und Vorrichtung zum Herstellen einer mit Markierungen versehenen Folie**
Method and device for producing a film with markings
Procédé et dispositif de fabrication d'une feuille pourvue d'un marquage

(43) Veröffentlichungstag der Anmeldung: 07.11.2012
(73) Patentinhaber: Reifenhäuser GmbH & Co. KG Maschinenfabrik, 53844 Troisdorf (DE)
(72) Erfinder: Meyer, Helmut, 53842 Troisdorf (DE); Hennes, Jochen, Dr., 65760 Eschborn (DE)
(74) Vertreter: Müller-Gerbes Wagner Albiger Patentanwälte

(56) Entgegenhaltungen:
- GB-A- 1 140 175
- GB-A- 1 198 342
- JP-A- 2006 306 027
- US-A- 3 632 716
- US-A- 5 116 444
- US-A- 5 160 777

## Beschreibung

Die Erfindung betrifft ein Verfahren und eine Vorrichtung zum Herstellen einer mit Markierungen, wie Zeichen, Grafiken, Buchstaben und Zahlen versehenen Folie entsprechend dem Oberbegriffe der Ansprüche 1 und 5, welcher in GB 1 198 342 offenbart ist.

Es ist bekannt, Folien auf Basis eines thermoplastischen Kunststoffes mit Markierungen zu versehen, indem die Folien nach ihrer Herstellung bedruckt werden. Hierbei werden z.B. Flexodruckmaschinen eingesetzt, die bis zu sieben Farben auf die Folie aufbringen. Hierbei entstehen Markierungen in Form von Bildern und/oder Schriftzügen.

Sehr häufig ist es aber nicht notwendig, derartige Bilder und Schriftzüge farblich darzustellen. Eine einzige Farbe, z.B. "weiß" reicht hier oftmals aus. Außerdem kann eine Bedruckung Schwierigkeiten aufwerfen, wenn z.B. Produkte mit den aufgebrachten Farben nicht in Berührung kommen dürfen. Auch eine notwendige Temperaturbeständigkeit der Farben ist z.B. bei Gefrierbeuteln nicht standardmäßig gegeben, da häufig die verwendeten Farben bei den niedrigen Temperaturen nicht ausreichend an der Folie haften.

Darüber hinaus ist die Bedruckung von Folien nach den bekannten Verfahren stets mit besonderem Aufwand verbunden, der verbesserungswürdig erscheint.

Aufgabe der Erfindung ist daher, ein Verfahren und eine Vorrichtung der eingangs genannten Art vorzuschlagen, mittels derer die Nachteile des Standes der Technik vermieden werden können.

Zur Lösung der gestellten Aufgabe wird erfindungsgemäß ein Verfahren gemäß den Merkmalen des Patentanspruches 1 vorgeschlagen.

Eine Vorrichtung zur Lösung der gestellten Aufgabe ist Gegenstand des Patentanspruches 7.

Vorteilhafte Ausgestaltungen und Weiterbildungen der Erfindung sind Gegenstand der jeweils abhängigen Ansprüche.

Das erfindungsgemäße Verfahren zeichnet sich dadurch aus, dass die Schmelzebahn und/oder die sich aus dieser bildende Folie an den den Markierungen entsprechenden Teilbereichen der Oberfläche der mindestens einen Kühlwalze mit einer gegenüber der verbleibenden Oberfläche abweichenden Kühlleistung beaufschlagt wird.

Die Erfindung macht sich somit den Effekt zunutze, dass durch aus dem Stand der Technik bekannte Abkühlung der Schmelzebahn unmittelbar nach dem Austritt aus der Extrusionsdüse über die Oberfläche der Kühlwalze eine starke, bisweilen schlagartige Abkühlung der entstehenden Folie erfolgt, die dieser Folie üblicherweise hohe Transparenz und hohen Glanz verleiht.

Wenn nun in der erfindungsgemäß vorgeschlagenen Weise die Schmelzebahn und/oder die sich aus dieser bildende Folie an den den Markierungen entsprechenden Teilbereichen der Oberfläche mit einer gegenüber der verbleibenden Oberfläche abweichenden Kühlleistung beaufschlagt wird, können gezielte Transparenz- oder Glanzunterschiede und dergleichen schon während des Extrusionsprozesses der Folie erzeugt werden, die sich auf der solchermaßen hergestellten Folie als Markierungen, etwa Bilder und Schriftzüge zeigen, ohne dass ein Druckprozess nach den bekannten Verfahren erforderlich ist. Das Aufbringen der Markierungen in Form von Schriftzügen und/oder Bildern kann von daher inline während der Herstellung der Folie erfolgen und die erzeugten Folien benötigen keine Vorbereitungs- oder Vorbehandlungsmaßnahmen für den eigentlichen Druckprozess mehr, der ebenfalls entfallen kann.

Es versteht sich, dass die gewünschten Markierungen in der Folie beispielsweise bei Herstellung einer an sich transparenten Folie dadurch erzeugt werden können, dass in den den Markierungen entsprechenden Teilbereichen der Oberfläche eine geringere Kühlleistung vorherrscht als in den verbleibenden Oberflächenbereichen der entsprechenden Kühlwalze, so dass sich die Markierung mit geringerer Transparenz und geringerem Glanz als opak erscheinende Markierung in der Folie zeigt. Dies wird nachfolgend als Positivverfahren bezeichnet.

In gleicher Weise ist es jedoch auch möglich, die zur Erzeugung der hohen Transparenz und des hohen Glanzgrades erforderliche hohe Kühlleistung nur in dem Teilbereich der Oberfläche der Kühlwalze vorzuhalten, in welchem die Markierungen entstehen sollen, während die übrigen bzw. verbleibenden Oberflächenbereiche der Kühlwalze mit einer geringeren Kühlleistung beaufschlagt werden, so dass sich letztgenannte mit geringerer Transparenz und geringerem Glanz im Wesentlichen opak darstellen, was nachfolgend als Negativverfahren bezeichnet wird.

Insoweit wird in Abhängigkeit von der Art der Markierungserzeugung im Positiv- oder Negativverfahren an den den Markierungen entsprechenden Teilbereichen der Oberfläche eine höhere oder niedrigere Kühlleistung als an der verbleibenden Oberfläche der mindestens einen Kühlwalze erzeugt.

Die nach dem erfindungsgemäßen Vorschlag erzeugbaren Markierungen beruhen insoweit auf abkühlungsbedingten lokalen Eigenschaftsänderungen der Folie und können so lange mittels entsprechend ausgerüsteter Kühlwalzen erzeugt werden, wie die Folie noch nicht vollständig abgekühlt ist. Somit können die Markierungen nicht nur im Bereich der ersten Kühlwalze an der dort aufliegenden Schmelzebahn, sondern auch noch im Bereich nachgeordneter Kühlwalzen erzeugt werden, über die die sich aus der Schmelzebahn bildende Folie geführt wird, solange diese noch nicht vollständig abgekühlt ist. Auch ist eine kombinierte Beaufschlagung mit unterschiedlicher Kühlleistung über mehrere Kühlwalzen denkbar, um den Effekt gemäß der Erfindung zu verstärken. Hierfür ist allerdings eine rapportgemäße Synchronisation der Kühlwalzen erforderlich.

Die Beaufschlagung der Oberflächenbereiche der Kühlwalze mit unterschiedlicher Kühlleistung kann z.B. durch unterschiedlich starke aktive Kühlung der Oberflächenbereiche oder durch Ausbildung der Oberflächenbereiche mit unterschiedlicher Wärmeleitfähigkeit erreicht werden.

Nach einem Vorschlag der Erfindung können die den Markierungen entsprechenden Teilbereiche der Oberfläche von einem Werkstoff mit dementsprechend höherer oder niedrigerer Wärmeleitfähigkeit als den Werkstoff zur Ausbildung der verbleibenden Oberfläche gebildet sein.

Ein solcher Werkstoff mit höherer oder niedrigerer Wärmeleitfähigkeit kann z.B. als Oberflächenbeschichtung auf die Oberfläche der mindestens einen Kühlwalze aufgebracht oder als Einsatzteil in die mit einer entsprechenden Ausnehmung versehene Oberfläche der Kühlwalze eingesetzt sein.

Zur Erzeugung einer niedrigeren Kühlleistung und niedrigeren Wärmeleitfähigkeit können geeignete wärmeisolierende Werkstoffe, wie Lackbeschichtungen, Papier oder Kunststofflagen und dgl. mehr auf die Oberfläche der Kühlwalze aufgebracht werden, die in Abhängigkeit vom angewandten Positiv- oder Negativverfahren entweder die den Markierungen entsprechenden Teilbereiche der Oberfläche oder die verbleibende Oberfläche der Kühlwalze bedecken.

Nach einem weiteren Vorschlag der Erfindung kann die Schmelzebahn und/oder die sich aus dieser bildende Folie zur Erhöhung der Kühlleistung mittels elektrostatischer Aufladung an die Oberfläche der mindestens einen Kühlwalze angezogen oder zur Verringerung der Kühlleistung von dieser abgestoßen werden. Vorstellbar ist es, durch entsprechende Materialauswahl in den Teilbereichen der Oberfläche, die beim Kontakt mit der zur Folie auskühlenden Schmelzebahn die Markierung erzeugen sollen, den Grad der elektrostatischen Anziehung bzw. Abstoßung in der gewünschten Weise abschwächen bzw. fördern, jeweils in Abhängigkeit vom Positiv- oder Negativverfahren.

Eine Vorrichtung gemäß der Erfindung zur Lösung der eingangs gestellten Aufgabe zeichnet sich dadurch aus, dass die Oberfläche der Kühlwalze in den den Markierungen entsprechenden Teilbereichen eine gegenüber der verbleibenden Oberfläche abweichende Wärmeleitfähigkeit aufweist.

In Abhängigkeit vom durchzuführenden Positiv- oder Negativverfahren ist in einem solchen Falle die Wärmeleitfähigkeit der den Markierungen entsprechenden Teilbereiche höher oder niedriger als die Wärmeleitfähigkeit an der verbleibenden Oberfläche der Kühlwalze ausgebildet.

Neben einer Beschichtung der den Markierungen entsprechenden Teilbereichen mit einer Beschichtung geringerer Wärmeleitfähigkeit, z. B. einem Lack oder einer Kunststoff- oder Papierlage ist es auch denkbar, auf die Oberfläche der Kühlwalze einen hülsenartigen Überzug aufzubringen, der mit Aussparungen versehen ist, die den Teilbereichen entsprechend der gewünschten Markierungen entsprechen, so dass in diesem Bereich die darunterliegende Oberfläche der Kühlwalze zugänglich ist, während in den übrigen Teilbereichen der hülsenartige Überzug die Oberfläche der Kühlwalze bildet. Je nach Materialauswahl des Überzuges kann sodann eine höhere oder niedrigere Wärmeleitfähigkeit in diesem Bereich gegenüber der Oberfläche der Kühlwalze erzeugt werden.

Es versteht sich, dass die Kühlwalzen sowohl zylindrisch als auch ballig ausgeführt sein können, ferner kann anstelle des vorangehend erläuterten hülsenartigen Überzuges auch ein Materialband einer dem Kühlwalzenumfang entsprechenden Länge eingesetzt werden oder aber es wird eine zusätzliche mit entsprechend unterschiedlicher Kühlleistung und/oder Wärmeleitfähigkeit in den Teilbereichen und den verbleibenden Bereichen ausgerüsteten Oberfläche in den Transportweg der erfindungsgemäß hergestellten Folie eingebracht, über den die Folie nach Austritt aus der Extrusionsdüse geführt wird.

Sofern die Oberfläche der Kühlwalze im Bereich der zu erzeugenden Markierungen zusätzlich auch noch eine Texturierung aufweist, kann die Folie in diesem Bereich auch eine leichte Prägung erfahren, wodurch die Markierungen noch besser sichtbar und randscharf abgebildet werden können.

Weitere Ausgestaltungen und Einzelheiten der Erfindung werden nachfolgend anhand der ein Ausführungsbeispiel darstellenden Zeichnung näher erläutert. Es zeigen:
- Figur 1: in schematischer Darstellung eine Vorrichtung zum Herstellen ei-ner mit Markierung versehenen Folie gemäß der Erfindung,
- Figur 2: eine Folie gemäß der Erfindung.

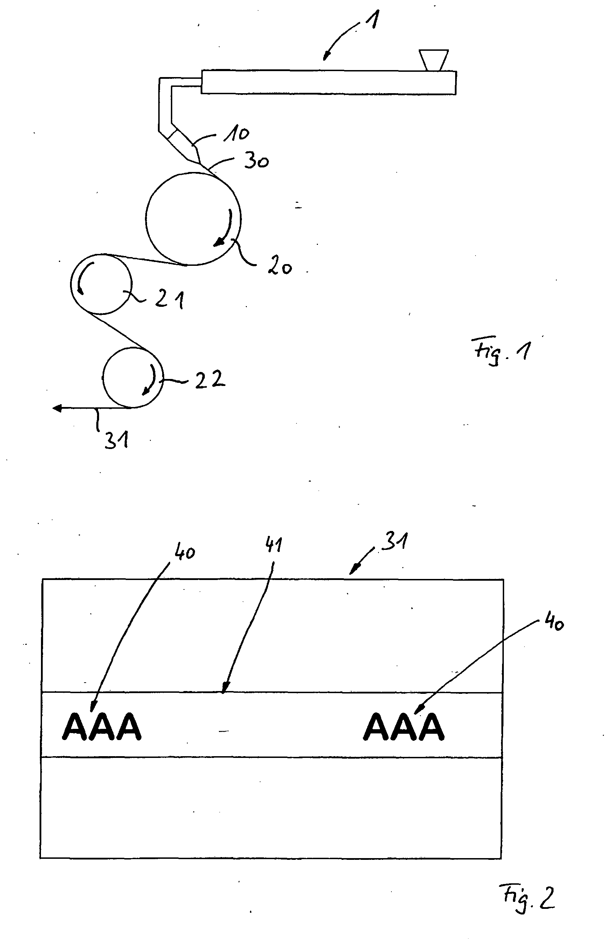

Aus der Figur 1 ist das Verfahren und die Vorrichtung zur Herstellung einer Folie ersichtlich, die gemäß Darstellung in der Figur 2 mit Markierungen versehen ist.

Die Folie 31 weist hier beispielhaft im mittleren Bereich durchgehende Markierungen in Gestalt eines kontinuierlich verlaufenden und z.B. leicht opak auf der im Übrigen transparent ausgeführten Folie erscheinenden Balkens 41 mit darin regelmäßig wiederkehrend angeordneten Beschriftungen 40 auf.

Zur Herstellung einer solchen Folie wird mindestens ein Extruder 1 verwendet, in welchem in an sich bekannter Weise aus dem verwendeten thermoplastischen Kunststoff eine Schmelze hergestellt wird, die sodann über eine dem Extruder 1 nachgeordnete Extrusionsdüse 10 als Schmelzebahn 30 austritt und auf eine erste Kühlwalze 20 aufgelegt wird. Diese Kühlwalze 20 ist temperiert und wird in der mit Pfeilen angedeuteten Drehrichtung drehbar angetrieben, wobei aufgrund der gekühlten Oberfläche der Kühlwalze 20 aufgrund des vorhandenen Temperaturgradienten zur aufgelegten Schmelzebahn 30 eine Kühlleistung auf die Schmelzebahn 30 ausgeübt wird, die diese binnen kürzester Zeit abkühlt, so dass die Schmelzebahn 30 im Verlauf des Aufliegens auf der Kühlwalze 20 zu der Folie 31 allmählich abgekühlt wird und darüber hinaus ihre hohe Transparenz und ihren Glanz erhält.

Darüber hinaus wird die sich bildende Folie 31 nachfolgend auch noch über zwei hier beispielhaft dargestellte weitere Kühlwalzen 21, 22 geführt, bevor sie der weiteren Verarbeitung zugeführt wird.

Im Bereich der Oberfläche jeder einzelnen Kühlwalze 20, 21, 22, in der die Abkühlung der Folie 31 aus der Schmelzebahn 30 noch nicht vollständig äbgeschlossen ist, kann über die graduelle Veränderung der Kühlleistung Einfluss auf die Transparenz und den Glanz der Folie 31 genommen werden.

Wenn nun eine oder mehrere der Kühlwalzen 20, 21, 22 über ihre senkrecht zur Zeichenebene in Figur 1 verlaufende Längsachse mit einer unterschiedlichen Kühlleistung ausgestattet sind, beispielsweise indem der Bereich, in welchem sich die Markierungen 40, 41 ausbilden sollen, mit einer Beschichtung geringerer Wärmeleitfähigkeit als die übrigen Oberflächenbereiche der Kühlwalze 20 bzw. 21 oder 22 versehen ist, bilden sich die Markierungen 40, 41 gemäß Figur 2 fortlaufend auf der Oberfläche aus.

Es ist offensichtlich, dass im Bereich der ersten Kühlwalze 20 der größte Effekt erzielt werden kann, jedoch kann auch im Bereich der weiteren Kühlwalzen 21, 22 ebenfalls noch eine solche Markierung 40, 41 in der Oberfläche der Folie 31 erzeugt werden.

Mit dem vorangehend erläuterten Verfahren und der Vorrichtung ist es somit möglich, Folien auf Basis eines thermoplastischen Kunststoffes ohne zusätzliche Bedruckung mit Markierungen in Gestalt von Schriftzügen und/oder Bildern und dergleichen mehr zu versehen, die kontinuierlich wiederkehrend auf der Oberfläche der Folie erzeugt werden. Da hierbei keinerlei Druckfarben Verwendung finden, sondern eine Veränderung der Gefügestruktur hinsichtlich Transparenz und/oder Glanzgrad zur Erzeugung der Markierungen verwendet wird, treten keinerlei Schwierigkeiten mit eventuell ein Verpackungsgut kontaminierenden Druckfarben und/oder mangelnder Haftung der Druckfarben an der Kunststofffolie auf.

Darüber hinaus lassen sich bedeutende Kostensenkungen in der Herstellung derartiger mit Markierungen versehener Folien erreichen.

## Patentansprüche

1. Verfahren zum Herstellen einer mit Markierungen (40, 41) versehenen Folie (31) auf Basis eines thermoplastischen Kunststoffes, wobei der thermoplastische Kunststoff in einem Extruder (1) aufgeschmolzen wird und aus einer Extrusionsdüse (10) als Schmelzebahn (30) austritt und über die Oberfläche mindestens einer Kühlwalze (20, 21, 22) abgeführt und zu der Folie (31) abgekühlt wird, **dadurch gekennzeichnet, dass** die Schmelzebahn (30) und/oder die sich aus dieser bildende Folie (31) an den den Markierungen (40, 41) entsprechenden Teilbereichen der Oberfläche der mindestens einen Kühlwalze (20, 21, 22) mit einer gegenüber der verbleibenden Oberfläche abweichenden Kühlleistung beaufschlagt wird, wobei die den Markierungen (40, 41) entsprechenden Teilbereiche der Oberfläche von einem Werkstoff mit höherer oder niedrigerer Wärmeleitfähigkeit im Vergleich zu dem Werkstoff zur Ausbildung der verbleibenden Oberfläche gebildet sind und der Werkstoff mit höherer oder niedrigerer Wärmeleitfähigkeit als Oberflächenbeschichtung auf die Oberfläche der mindestens einen Kühlwalze (20, 21, 22) aufgebracht oder als Einsatzteil in die mit einer entsprechenden Ausnehmung versehene Oberfläche der Kühlwalze (20, 21, 22) eingesetzt ist.

2. Verfahren nach Anspruch 1, **dadurch gekennzeichnet, dass** an den den Markierungen (40, 41) entsprechenden Teilbereichen der Oberfläche eine höhere oder niedrigere Kühlleistung als an der verbleibenden Oberfläche der mindestens einen Kühlwalze (20, 21, 22) erzeugt wird.

3. Verfahren nach einem der Ansprüche 1 oder 2, **dadurch gekennzeichnet, dass** die Schmelzebahn (30) und/oder die sich aus dieser bildende Folie (31) mittels elektrostatischer Aufladung an die Oberfläche der mindestens einen Kühlwalze (20, 21, 22) angezogen oder von dieser abgestoßen wird.

4. Verfahren nach Anspruch 3, **dadurch gekennzeichnet, dass** die Wirkung der elektrostatischen Aufladung in den den Markierungen entsprechenden Teilbereichen der Oberfläche gegenüber der Wirkung der verbleibenden Oberfläche abweichend ausgebildet wird.

5. Vorrichtung zum Herstellen einer mit Markierungen (40, 41) versehenen Folie (31) auf Basis eines thermoplastischen Kunststoffes, umfassend mindestens einen Extruder (1) zum Erzeugen einer Schmelze aus dem thermoplastischen Kunststoff sowie eine dem mindestens einen Extruder nachgeordnete Extrusionsdüse (10) und mindestens eine Kühlwalze (20, 21, 22), auf die eine aus der Extrusionsdüse (10) ausbringbare Schmelzebahn (30) auflegbar ist, **dadurch gekennzeichnet, dass** die Oberfläche der Kühlwalze (20, 21, 22) in den den Markierungen (40, 41) entsprechenden Teilbereichen eine gegenüber der verbleibenden Oberfläche abweichende Wärmeleitfähigkeit aufweist, wobei auf die Oberfläche der Kühlwalze (20, 21, 22) ein hülsenartiger Überzug mit Aussparungen in den den Markierungen (40, 41) entsprechenden Teilbereichen aufgebracht ist und der hülsenartige Überzug aus einem Material mit höherer oder niedrigerer Wärmeleitfähigkeit als die Oberfläche der Kühlwalze (20, 21, 22) gebildet ist oder die Oberfläche der Kühlwalze (20, 21, 22) in den den Markierungen (40, 41) entsprechenden Teilbereichen mit Ausnehmungen versehen ist, in die ein Einsatzteil aus einem Material mit höherer oder niedrigerer Wärmeleitfähigkeit als die Oberfläche der Kühlwalze (20, 21, 22) eingesetzt ist.

6. Vorrichtung nach Anspruch 5, **dadurch gekennzeichnet, dass** die Wärmeleitfähigkeit der den Markierungen (40, 41) entsprechenden Teilbereiche höher oder niedrigerer als die Wärmeleitfähigkeit an der verbleibenden Oberfläche der Kühlwalze (20, 21, 22) ausgebildet ist.

7. Vorrichtung nach Anspruch 5 oder 6, **dadurch gekennzeichnet, dass** die Oberfläche der Kühlwalze (20, 21, 22) an den den Markierungen (40, 41) entsprechenden Teilbereichen mit einer Beschichtung geringerer Wärmeleitfähigkeit versehen ist.

8. Vorrichtung nach Anspruch 7, **dadurch gekennzeichnet, dass** die Beschichtung von einem Lack oder einer Papier- oder Kunststofflage gebildet ist.

## Claims

1. A method of producing a film (31) - provided with markings (40, 41) - on the basis of a thermoplastic plastics material, wherein the thermoplastic plastics material is melted in an extruder (1) and issues as a length (30) of melted material from an extrusion nozzle (10) and is removed by way of the surface of at least one cooling roller (20, 21, 22) and is cooled to form the film (31), **characterized in that** the length (30) of melted material and/or the film (31) formed from the latter on the portions - corresponding to the markings (40, 41) - of the surface of the at least one cooling roller (20, 21, 22) is or are acted upon with a cooling power differing from the remaining surface, wherein the portions of the surface corresponding to the markings (40, 41) are formed by a material with a higher or lower thermal conductivity as compared with the material for forming the remaining surface and the material with the higher or lower thermal conductivity is applied as a surface coating to the surface of the at least one cooling roller (20, 21, 22) or is inserted as an insert part into the surface of the cooling roller (20, 21, 22) provided with a corresponding recess.

2. A method according to claim 1, **characterized in that** a cooling power higher or lower than at the remaining surface of the at least one cooling roller (20, 21, 22) is produced at the portions of the surface corresponding to the markings (40, 41).

3. A method according to one of claims 1 or 2, **characterized in that** the length (30) of melted material and/or the film (31) formed from the latter is or are attracted to the surface of the at least one cooling roller (20, 21, 22) or are repelled from it by means of electrostatic charging.

4. A method according to claim 3, **characterized in that** the effect of the electrostatic charging in the portions of the surface corresponding to the markings is designed to deviate from the effect of the remaining surface.

5. An apparatus for producing a film (31) - provided with markings (40, 41) - on the basis of a thermoplastic plastics material, comprising at least one extruder (1) for producing a melted material from the thermoplastic plastics material, as well as an extrusion nozzle (10) arranged downstream of the at least one extruder and at least one cooling roller (20, 21, 22) to which a length (30) of melted material capable of being produced from the extrusion nozzle (10) is capable of being applied, **characterized in that** the surface of the cooling roller (20, 21, 22) in the portions corresponding to the markings (40, 41) has a thermal conductivity which differs from the remaining surface, wherein a sleeve-like covering with apertures in the portions corresponding to the markings (40, 41) is applied to the surface of the cooling roller (20, 21, 22) and the sleeve-like covering is formed from a material with a thermal conductivity higher or lower than the surface of the cooling roller (20, 21, 22) or the surface of the cooling roller (20, 21, 22) is provided in the portions corresponding to the markings (40, 41) with recesses into which an insert part of a material with a thermal conductivity higher or lower than the surface of the cooling roller (20, 21, 22) is inserted.

6. An apparatus according to claim 5, **characterized in that** the thermal conductivity of the portions corresponding to the markings (40, 41) is made higher or lower than the thermal conductivity at the remaining surface of the cooling roller (20, 21, 22).

7. An apparatus according to claim 5 or 6, **characterized in that** the surface of the cooling roller (20, 21, 22) at the portions corresponding to the markings (40, 41) is provided with a coating of lower thermal conductivity.

8. An apparatus according to claim 7, **characterized in that** the coating is formed by a lacquer or a layer of paper or plastics material.

## Revendications

1. Procédé de fabrication d'une feuille (31) pourvue de marquages (40, 41), à base de matière plastique thermoplastique, la matière plastique thermoplastique étant fondue dans une extrudeuse (1) et sortant d'une filière d'extrusion (10) comme bande de matière fondue (30) et étant évacuée sur la surface d'au moins un cylindre de refroidissement (20, 21, 22) et refroidie pour donner la feuille (31), **caractérisé en ce que** la bande de matière fondue (30) et/ou la feuille (31) se formant à partir de celle-ci est soumise sur les zones partielles de la surface dudit au moins un cylindre de refroidissement (20, 21, 22) qui correspondent aux marquages (40, 41) à une puissance de refroidissement se différenciant de celle de la surface restante, les zones partielles de la surface qui correspondent aux marquages (40, 41) étant formée d'une matière à conductibilité thermique plus élevée ou plus basse par comparaison avec la matière destinée à former la surface restante et la matière à conductibilité thermique plus élevée ou plus basse est appliquée comme revêtement sur la surface dudit au moins un cylindre de refroidissement (20, 21, 22) ou est insérée comme pièce d'insertion dans la surface du cylindre de refroidissement (20, 21, 22) pourvue d'un évidement correspondant.

2. Procédé selon la revendication 1, **caractérisé en ce qu'**une puissance de refroidissement plus élevée ou plus basse est générée sur les zones partielles de la surface qui correspondent aux marquages (40, 41) que sur la surface restante dudit au moins un cylindre de refroidissement (20, 21, 22).

3. Procédé selon la revendication 1 ou 2, **caractérisé en ce que** la bande de matière fondue (30) et/ou la feuille (31) se formant à partir de celle-ci est attirée sur la surface dudit au moins un cylindre de refroidissement (20, 21, 22) ou en est repoussée au moyen d'une charge électrostatique.

4. Procédé selon la revendication 3, **caractérisé en ce que** l'action de la charge électrostatique dans les zones partielles de la surface qui correspondent aux marquages est conçue différemment de l'action de la surface restante.

5. Dispositif de fabrication d'une feuille (31) pourvue de marquages (40, 41), à base d'une matière plastique thermoplastique, comprenant au moins une extrudeuse (1) pour produire une masse fondue à partir la matière plastique thermoplastique ainsi qu'une filière d'extrusion (10) disposé en aval de ladite au moins une extrudeuse et au moins un cylindre de refroidissement (20, 21, 22) sur lequel une bande de matière fondue (30) sortant de la filière d'extrusion (10) peut être placée, **caractérisé en ce que** la surface du cylindre de refroidissement (20, 21, 22) présente dans les zones partielles correspondant aux marquages (40, 41) une conductibilité thermique se différenciant de celle la surface restante, dans lequel un revêtement en forme de manchon, pourvu d'évidements dans les zones partielles correspondant aux marquages (40, 41) est appliqué sur la surface du cylindre de refroidissement (20, 21, 22) et le revêtement en forme de manchon est formé d'un matériau à conductibilité thermique plus élevée ou plus basse que la surface du cylindre de refroidissement (20, 21, 22) ou la surface du cylindre de refroidissement (20, 21, 22) est pourvue dans les zones partielles correspondant aux marquages (40, 41) d'évidements dans lesquels une pièce d'insertion constituée d'un matériau à conductibilité thermique plus élevée ou plus basse que celle de la surface du cylindre de refroidissement (20, 21, 22) est insérée.

6. Dispositif selon la revendication 5, **caractérisé en ce que** la conductibilité thermique des zones partielles correspondant aux marquages (40, 41) est conçue plus élevée ou plus basse que la conductibilité thermique sur la surface restante du cylindre de refroidissement (20, 21, 22).

7. Dispositif selon la revendication 5 ou 6, **caractérisé en ce que** la surface du cylindre de refroidissement (20, 21, 22) est pourvue sur les zones partielles correspondant aux marquages (40, 41) d'un revêtement à conductibilité thermique plus basse.

8. Dispositif selon la revendication 7, **caractérisé en ce que** le revêtement est formé d'une peinture ou d'une couche de papier ou de matière plastique.
